Europäisches Patentamt

European Patent Office

Office européen des brevets

(11) Publication number: **0 672 624 A1**

## EUROPEAN PATENT APPLICATION

(21) Application number: **94301198.1**

(22) Date of filing: **21.02.94**

(51) Int. Cl.6: **C02F 1/52**, C02F 1/66

(43) Date of publication of application:
**20.09.95 Bulletin 95/38**

(84) Designated Contracting States:
**GB**

(71) Applicant: **ECC INTERNATIONAL LIMITED**
**1015 Arlington Business Park**
**Theale,**
**Reading,**
**Berkshire RG7 4SA (GB)**

(72) Inventor: **Bleakley, Ian Stuart**
**30 Trembear Road**
**St Austell**
**Cornwall PL25 4BJ (GB)**

(74) Representative: **Nash, David Allan et al**
**Haseltine Lake & Co.**
**Hazlitt House**
**28 Southampton Buildings**
**Chancery Lane**
**London WC2A 1AT (GB)**

(54) Treatment of waste water.

(57) A process for removing dissolved species from an aqueous system is disclosed. First, an alkaline earth metal carbonate precipitate is caused to form in the aqueous system. The precipitate, with which previously dissolved species have become associated, is then separated from the system.

EP 0 672 624 A1

Rank Xerox (UK) Business Services
(3.10/3.09/3.3.4)

The invention relates to a process for treating waste water which contains dissolved contaminants, and especially for decreasing the concentration of dissolved species such as metallic cations in solution in the waste water.

Environmental regulations restrict the concentration of metallic cations in aqueous industrial effluents which may be discharged to rivers and streams, and in cases in which an industrial installation produces effluent which has levels of metallic cation concentrations which are higher than the permissible maxima, it is necessary to treat the effluent to reduce these levels. This problem is particularly acute in the metalliferous mining industry where concentrations of metallic cations in the effluent water can be extremely high, and some cations present in the effluent water are particularly toxic and harmful to the environment.

According to a first aspect of the present invention, there is provided a process for removing dissolved species from an aqueous system which comprises the steps of:

(i) causing an alkaline earth metal carbonate precipitate to form in the aqueous system; and

(ii) separating the said precipitate with which previously dissolved species have become associated.

In the process of the invention, the dissolved species become associated with the alkaline earth metal carbonate precipitate and are separated with the precipitate in step (ii). In addition to the dissolved species becoming adsorbed to the surface of the particles of alkaline earth metal carbonate, they may also be captured or entrained within the body of such particles.

The dissolved species are preferably ionic in nature.

The present invention is particularly suited to the treatment of aqueous effluents containing dissolved ionic species, such as the effluents produced in the metalliferous mining industry, which may contain toxic metal species. The invention may also, however, be used to remove non-metallic anions from solution, such as, for example, silicate, phosphate and sulphate ions. Examples of possible contaminants which may be removed in accordance with the present invention, and the concentrations in which they may typically appear are given in Tables 1 and 2. Typical ions of interest are ferrous and ferric iron, aluminium, chromium, copper, manganese, nickel, lead, silicate and sulphate. The invention may be used to remove contaminants at any concentration, but has been found to be particularly useful when the concentration of the contaminant is relatively low, for example between 1000ppm and the maximum acceptable concentration suitable for potable water purposes.

The alkaline earth metal carbonate precipitate may be caused to form in the aqueous system by the following steps:

(a) introducing a particulate alkaline earth metal hydroxide into the said aqueous system to form an aqueous suspension thereof;

(b) passing a gas containing carbon dioxide through the aqueous suspension formed in step (a) to form a precipitate of the alkaline earth metal carbonate.

The alkaline earth metal hydroxide may be introduced into the aqueous system as the already formed hydroxide in dry solid form or in aqueous suspension, or, alternatively, may be formed in situ in the aqueous system by introducing into the aqueous system an alkaline earth metal oxide, and allowing the hydroxide to be formed by reaction of the oxide with water. Preferably the alkaline earth metal hydroxide is calcium hydroxide.

The amount of the alkaline earth metal hydroxide added to the aqueous system is preferably such as will provide from 10 to 5,000 moles of alkaline earth metal carbonate per cubic metre of the aqueous system. Most preferably the amount is such as to provide from 20 to 2,000 moles of alkaline earth metal carbonate per cubic metre of the aqueous system.

As the gas containing carbon dioxide is passed through the aqueous suspension formed in step (a) the pH of the suspension falls reflecting the development of the precipitate; the pH may be measured in the process to monitor the development of the precipitate. Normally, the pH should not be allowed to fall to a pH much below about 7.0. Typically, the gas containing carbon dioxide will be admitted until the pH lies within the range of from about 7.0 to about 7.5, at which point the formation of the precipitate is substantially complete.

The carbon dioxide-containing gas may contain from about 5% to about 50% by volume of carbon dioxide, the remainder being conveniently air or nitrogen. The gas may be obtained, for example, from the flue gas from a furnace or the exhaust from an engine burning a carbonaceous fuel. The rate of admission of the carbon dioxide-containing gas is preferably in the range of from 0.002 to 0.2 moles of carbon dioxide per minute per mole of alkaline earth metal hydroxide. The carbon dioxide-containing gas is advantageously admitted into the suspension of alkaline earth metal hydroxide in waste water in the form of fine bubbles.

The suspension is preferably agitated substantially continuously during the admission of the carbon dioxide-containing gas, and the admission is preferably continued until the pH of the suspension has fallen to 7.0 or below.

In step (ii) the precipitated alkaline earth metal carbonate is preferably separated from the aqueous system by filtration, but a centrifuge may alternatively be used for this purpose. After the alkaline earth metal carbonate has been separated from the aqueous system, it is found that the concentration of dissolved species, for example metallic cations, in the aqueous system is very much reduced. The precipitated calcium carbonate with previously dissolved species, such as metallic compounds, associated therewith may be safely disposed of in, for example, a landfill site.

The present invention provides a method by which a substantial proportion of the dissolved species, such as metallic cations, in solution in an aqueous effluent can be removed easily and relatively cheaply to give a treated effluent which is acceptable for discharge to the environment.

The invention will now be illustrated by reference to the following examples.

**EXAMPLE 1**

A sample of effluent water containing high proportions of metallic cations from a Cornish tin mine was divided into seven 1 litre portions. To each of six portions there were added different amounts of a hydrated lime of specific surface area $17.4m^2.g^{-1}$, as measured by the B.E.T nitrogen adsorption method, and the mixture was thoroughly stirred. A gas containing 25% by volume of carbon dioxide in air was then passed through the mixture in the form of fine bubbles and at a rate which was calculated to be equivalent to 0.023 moles of carbon dioxide per minute per mole of calcium hydroxide. The flow of the carbon dioxide containing gas was continued until the pH of the mixture had fallen to 7.0 and the mixture was stirred throughout the carbonation step. The precipitate formed during the carbonation step, which consisted predominantly of calcium carbonate, with metallic compounds associated therewith, was separated from the aqueous medium by filtration. The concentrations of various metallic cations in the filtrate were measured by the procedure of inductively coupled plasma spectroscopy. The concentrations of the same metallic cations present in the seventh, untreated portion of tin mine effluent water were also measured by the same procedure.

The results obtained are set forth in Table 1 below. Also in Table 1 are given the maximum concentrations of the various cations which are permissible in municipal potable water.

3

Table 1

| Cations (ppm) | Control | Portion 1 | Portion 2 | Portion 3 | Portion 4 | Portion 5 | Portion 6 | Potable water |
|---|---|---|---|---|---|---|---|---|
| g Ca(OH)$_2$/dm$^3$ | 0 | 4.4 | 9.3 | 18.1 | 37 | 74 | 148 | – |
| mole CaCO$_3$/m$^3$ | 0 | 29.5 | 63.0 | 122.5 | 250 | 500 | 1000 | – |
| Iron | 478 | 0.05 | 0.05 | 0.05 | 0.05 | 0.05 | 0.26 | 0.2 |
| Aluminium | 60.6 | 0.1 | 0.1 | 0.1 | 0.1 | 0.1 | 0.1 | 0.2 |
| Zinc | 248 | 1.96 | 1.28 | 0.02 | 0.02 | 0.19 | 0.02 | 5 |
| Copper | 2.19 | 0.02 | 0.02 | 0.02 | 0.06 | 0.02 | 0.02 | 0.05 |
| Nickel | 1.2 | 0.17 | 0.06 | 0.03 | 0.02 | 0.01 | 0.02 | 0.05 |
| Manganese | 14.55 | 0.017 | 0.101 | 0.013 | 0.02 | 0.01 | 0.02 | 0.05 |
| Chromium | 0.55 | – | – | – | 0.08 | 0.02 | 0.21 | 0.05 |

Note: "ppm" means parts by weight of the cation per million parts by weight of the effluent water.

These results show that, even when the quantity of calcium carbonate precipitated in the effluent water is as little as 29.5 moles of calcium carbonate per cubic metre of effluent water, the concentrations of most metallic cations in the water are reduced to below the permissible maxima for municipal potable water. A larger amount of precipitated calcium carbonate appears to be required to reduce the concentrations of nickel and chromium to acceptable levels.

**EXAMPLE 2**

Two samples of effluent water from a kaolin plant in Victoria, Australia, being, respectively, filtrate from a filterpress plant and effluent from a refining plant, were treated in the manner described in Example 1

4

above, the amount of calcium hydroxide introduced into the effluent water in each case being 5g per litre of water. The concentrations of various metallic cations and also of sulphate ions and of silica were determined by inductively coupled plasma spectroscopy before and after treatment in accordance with the invention, and the results are set forth in Table 2 below:

Table 2

| Cation ppm | Filterpress Filtrate | | Refining Plant Effluent | |
|---|---|---|---|---|
| | Untreated | Treated | Untreated | Treated |
| Aluminium | 29.2 | 6.3 | 15.4 | 6.5 |
| Iron | 51.8 | <0.25 | 19.0 | <0.125 |
| Chromium | <0.1 | 0.1 | <0.1 | 0.1 |
| Copper | 0.15 | <0.1 | 0.1 | <0.1 |
| Manganese | <0.1 | <0.1 | 0.1 | <0.1 |
| Nickel | <0.1 | <0.1 | 0.1 | <0.1 |
| Lead | <0.125 | <0.125 | 0.125 | <0.125 |
| Zinc | 0.2 | <0.1 | 0.3 | <0.1 |
| Silica | 57.7 | 33.6 | 80.2 | 4.8 |
| Sulphate | 938 | 285 | 749 | 252 |

## Claims

1. A process for removing dissolved species from an aqueous system which comprises the steps of:
   (i) causing an alkaline earth metal carbonate precipitate to form in the aqueous system; and
   (ii) separating the said precipitate to which previously dissolved species have become associated.

2. A process according to claim 1, wherein the alkaline earth metal carbonate precipitate is caused to form in the aqueous system by:
   (a) introducing a particulate alkaline earth metal hydroxide into the said aqueous system to form an aqueous suspension thereof; and
   (b) passing a gas containing carbon dioxide through the aqueous suspension formed in step (a) to form a precipitate of the alkaline earth metal carbonate.

3. A process according to claim 2, wherein the alkaline earth metal hydroxide is introduced into the aqueous system as the already formed hydroxide in dry solid form or in aqueous suspension.

4. A process according to claim 2, wherein the alkaline earth metal hydroxide is formed in situ in the aqueous system by introducing into the aqueous system an alkaline earth metal oxide and permitting the hydroxide to be formed by reaction of the oxide with water.

5. A process according to any preceding claim, wherein the alkaline earth metal hydroxide is calcium hydroxide.

6. A process according to any preceding claim, wherein the amount of the alkaline earth metal hydroxide added to the aqueous system is such as will provide from 10 to 5,000 moles of alkaline earth metal carbonate per cubic metre of the aqueous system.

7. A process according to claim 6, wherein the amount of the alkaline earth metal hydroxide added to the aqueous system is such as will provide from 20 to 2,000 moles of alkaline earth metal carbonate per cubic metre of the aqueous system.

8. A process according to any preceding claim, wherein the carbon dioxide-containing gas contains from about 5% to about 50% by volume of carbon dioxide.

9. A process according to any preceding claim, wherein the rate of admission of the carbon dioxide-containing gas is in the range of from 0.002 to 0.2 moles of carbon dioxide per minute per mole of alkaline earth metal hydroxide.

10. A process according to any preceding claim, wherein the carbon dioxide-containing gas is admitted into the suspension of alkaline earth metal hydroxide in the form of fine bubbles.

11. A process according to any preceding claim, wherein the suspension is agitated substantially continuously during the admission of the carbon dioxide-containing gas.

12. A process according to any preceding claim, wherein the admission of carbon dioxide-containing gas is continued until the pH of the suspension has fallen to 7.0 or below.

13. A process according to any preceding claim, wherein, in step (ii), the precipitated alkaline earth metal carbonate is separated by filtration or centrifugation.

14. A process according to any preceding claim, wherein the dissolved species comprise dissolved metallic species.

15. A process according to any preceding claim, wherein the aqueous system is an aqueous effluent containing dissolved metal species.

16. A process according to claim 15, wherein the effluent origin is the metalliferous mining industry.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-2 294 986 (AGROTECHNIKA)<br><br>* page 9; claim 1 *<br>* page 1, line 40 - page 2, line 8 *<br>* page 3, line 23 - line 39 *<br>* page 5, line 17 - line 28 * | 1,3-5,<br>10,11 | C02F1/52<br>C02F1/66 |
| X | FR-A-2 373 492 (AGENCE NATIONALE DE VALORISATION DE LA RECHERCHE)<br>* page 1, line 37 - page 2, line 37 *<br>* page 3, line 29 - line 36 *<br>* page 5, line 18 - page 6, line 4; figure 1 * | 1,3,5,<br>10,14,15 | |
| X | WO-A-93 09064 (HENKEL KG)<br>* page 10; claims 1,7 *<br>* page 5, line 13 - line 18 * | 1-5,13 | |
| X | EP-A-0 072 885 (DECONTA AG)<br><br>* page 13; claims 1,4 *<br>* page 11; example 1 *<br>* page 9, line 4 - line 12 * | 1,3-5,<br>14,15 | TECHNICAL FIELDS SEARCHED (Int.Cl.6)<br><br>C02F |
| X | DATABASE WPI<br>Week 7918,<br>Derwent Publications Ltd., London, GB;<br>AN 79-34047B<br>& JP-A-54 037 365 (MITSUBISHI HEAVY IND. K. K.) 19 March 1979<br>* abstract * | 1,14,15 | |

-/--

The present search report has been drawn up for all claims

| Place of search | Date of completion of the search | Examiner |
|---|---|---|
| THE HAGUE | 21 July 1994 | Teply, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Week 7412,<br>Derwent Publications Ltd., London, GB;<br>AN 74-22173V<br>& JP-A-69 009 227 (JAPAN ORGANO K. K.) 27 February 1974<br>* abstract * | 1,14,15 | |
| | ----- | | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 21 July 1994 | Teply, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document